# FASCICULE DE BREVET EUROPEEN

(11) **EP 2 666 657 B1**
(45) Date de publication et mention de la délivrance du brevet: **04.03.2015**
(21) Numéro de dépôt: 13169166.9
(22) Date de dépôt: 24.05.2013
(51) Int. Cl.: B60K 17/10, F16H 61/40, B60K 6/12, F16D 25/0638, B60W 10/02, B60W 10/04, F16D 25/08

(54) **Appareil hydraulique comprenant un assemblage amélioré d'une machine hydraulique et d'un embrayage**
Hydraulisches Gerät, das eine verbesserte Anordnung einer hydraulischen Maschine und einer Kupplung umfasst
Hydraulic device including an improved assembly of a hydraulic machine and a clutch

(30) Priorité: 24.05.2012 FR 1254767
(43) Date de publication de la demande: 27.11.2013
(73) Titulaire: Poclain Hydraulics Industrie, 60410 Verberie (FR)
(72) Inventeur: Lucienne, Philippe Raymond, 60411 VERBERIE CEDEX (FR); Hornacek, Bohdan, 911 01 TRENCIN (SK); Kuban, Viktor, 911 01 TRENCIN (SK); Heren, Jean A, 60411 VERBERIE CEDEX (FR); Gouzou, Christophe, 60410 VERBERIE (FR)
(74) Mandataire: Regimbeau

(56) Documents cités:
- WO-A1-02/079661
- WO-A1-03/046380
- US-A- 5 221 101
- US-A1- 2009 210 120

## Description

### DOMAINE TECHNIQUE

La présente invention concerne le domaine des machines hydrauliques débrayables, par exemple des pompes ou moteurs hydrauliques.

### ETAT DE LA TECHNIQUE

Les dispositifs hydrauliques, tels que les pompes ou les moteurs sont associés à un embrayage permettant la mise en prise et la désolidarisation dudit dispositif hydraulique selon les besoins du système où ils sont intégrés.

Les pompes et moteurs hydrauliques sont habituellement fabriqués en tant qu'unités indépendantes dans un carter donné, et sont ensuite associés à un embrayage, qui est relié à un arbre en saillie depuis le carter de la pompe ou du moteur, formant ainsi un ensemble comprenant un dispositif hydraulique avec un embrayage. Le document publié WO 03/046 380 divulgue un ensemble qui est illustré sur la figure 1.
L'ensemble 1 tel qu'illustré est constitué de l'association d'un embrayage 2 et d'un dispositif hydraulique 3. Cette association est typiquement réalisée en boulonnant le carter de l'embrayage 2 au carter du dispositif hydraulique 3.

L'ensemble 1 comprend un arbre d'entraînement 4 s'étendant à travers la longueur de l'ensemble 1, et un organe d'arbre 5 qui s'étend autour de l'arbre d'entraînement 4, sur une portion limitée dudit arbre d'entraînement.
Dans l'ensemble 1 illustré, l'arbre d'entraînement 4 et l'organe d'arbre 5 sont chacun associés à des disques de friction respectivement 6 et 7, qui sont adaptés pour se mettre en prise l'un l'autre par friction ou pour être séparés (et donc pas en contact) via l'application d'une commande par des moyens de pilotage 8, de façon à mettre en prise ou non la rotation de l'arbre d'entraînement 4 avec la rotation de l'organe d'arbre 5.
Le centrage de l'arbre d'entraînement 4 et de l'organe d'arbre 5 est réalisé via l'utilisation d'au moins deux paliers pour l'arbre d'entraînement et deux paliers pour l'organe d'arbre. Les deux paliers de l'arbre d'entraînement sont situés à ses deux extrémités ; l'un dans le carter d'embrayage et l'un dans le distributeur du dispositif hydraulique 3. Les deux paliers de l'organe d'arbre 5 sont situés entre les deux paliers de l'arbre d'entraînement 4, à chaque extrémité de l'organe d'arbre 5 ; l'un dans le dispositif hydraulique 3 à proximité de son extrémité relié à l'embrayage 2, et l'un dans le distributeur du dispositif hydraulique 3.

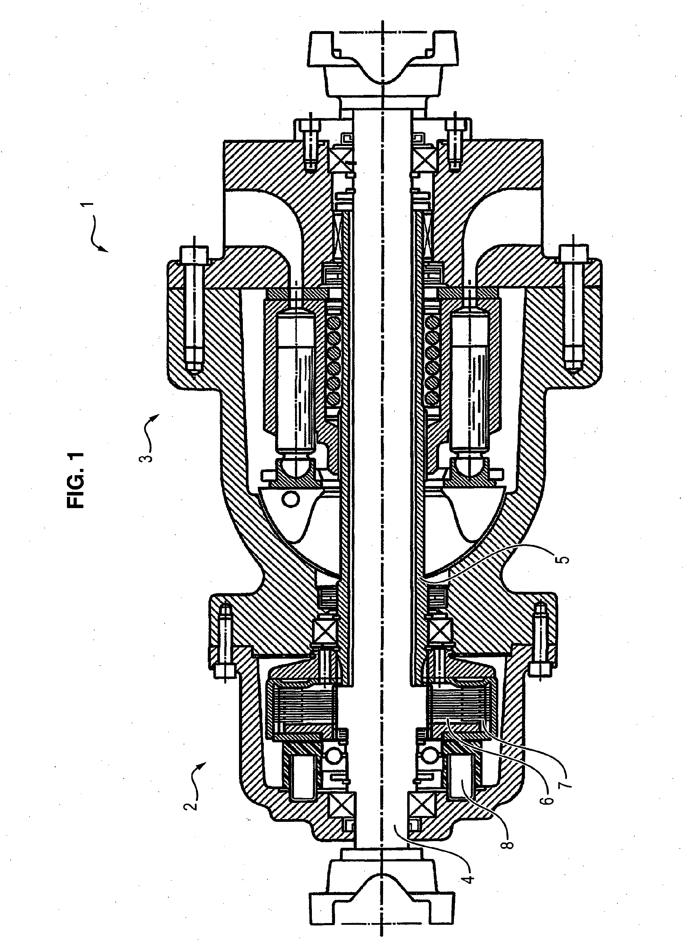

L'ensemble illustré sur la figure 1 illustre les problèmes techniques soulevés par un tel ensemble, qui nécessite beaucoup d'espace, et nécessite un positionnement très strict de l'arbre d'entraînement relativement à l'organe d'arbre. Un tel ensemble présente donc des inconvénients importants en termes d'utilisation pour son positionnement dans un système, et pour sa fabrication en raison des tolérances de dimension très rigoureuses qu'il nécessite.

### PRESENTATION DE L'INVENTION

La présente invention a pour objectif de fournir un dispositif qui résolve ces problèmes techniques, et propose un appareil hydraulique conforme à la revendication 1 annexée.

Dans une variante de cet exemple précédent, ledit carter comprend typiquement un carter de machine à l'intérieur duquel la machine hydraulique est située et un carter d'embrayage à l'intérieur duquel l'embrayage interne commun, le piston d'embrayage étant situé à l'intérieur du carter de machine de sorte que son déplacement le met en contact avec la rondelle située à l'intérieur du carter d'embrayage. Le piston d'embrayage peut alors être associé à un ressort de piston reposant sur le carter d'embrayage, et s'opposant au déplacement du piston d'embrayage résultant d'une augmentation de pression à l'intérieur de la chambre du piston d'embrayage.

Dans une autre variante dudit mode de réalisation supplémentaire, lesdits moyens de pilotage comprennent un accumulateur, un compresseur, une pompe (par exemple, une pompe de récupération) ou toute circuiterie hydraulique adaptée pour alimenter lesdits moyens de pilotage.
L'invention concerne également un véhicule comprenant un appareil hydraulique tel que défini précédemment. Dans un mode de réalisation spécifique, l'arbre d'embrayage est relié à un moteur principal dudit véhicule, et qui comprend une pompe de gavage couplée à l'arbre de moteur, en amont de l'arbre relativement au moteur principal, ladite pompe de gavage étant reliée à des moyens de pilotage de sorte qu'elle rince l'embrayage, assure le gavage de la machine hydraulique et active l'embrayage.

L'invention concerne donc un appareil hydraulique comprenant une machine hydraulique dotée d'un embrayage, avec une compacité accrue et des relations spatiales améliorées entre les divers composants.

### PRESENTATION DES FIGURES

D'autres caractéristiques, objectifs et avantages de l'invention sont montrés dans la description suivante, qui est strictement illustrative et non limitante, et qui doit être lue conjointement avec les dessins annexés, dans lesquels :
- la figure 1, qui a été précédemment décrite, présente un exemple d'ensemble hydraulique selon l'état de l'art ;
- les figures 2 et 3 illustrent respectivement une vue globale et une vue détaillée d'un appareil hydraulique selon un aspect de l'invention ;
- la figure 4 est une vue détaillée de la figure 3,
- les figures 5 et 6 illustrent un autre aspect de l'invention où l'appareil hydraulique est couplé à un circuit hydraulique comprenant une pompe de récupération et de rinçage.

### DESCRIPTION DETAILLEE

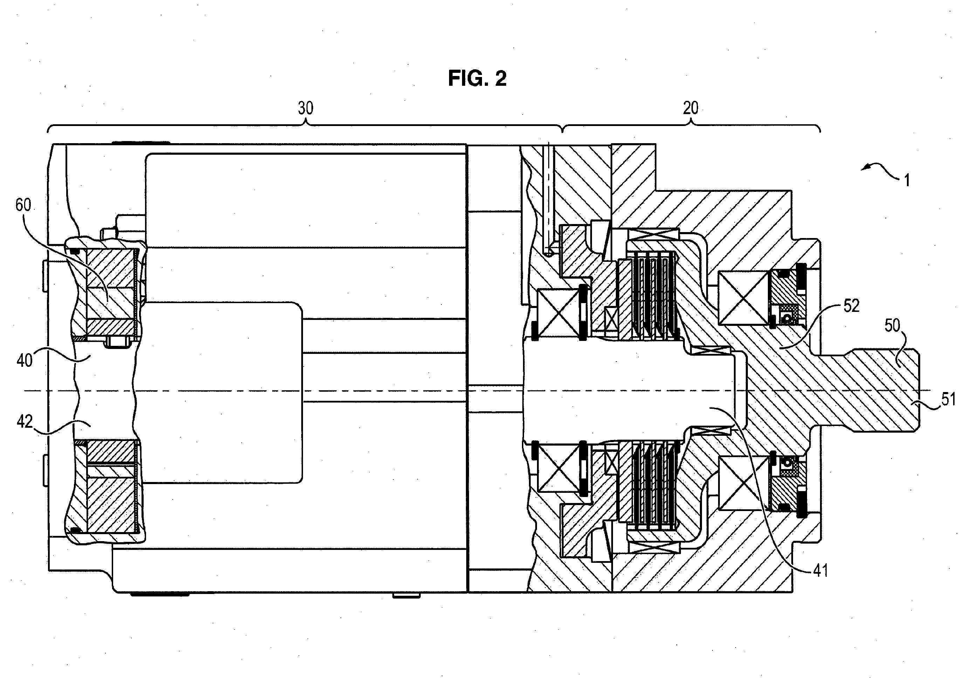

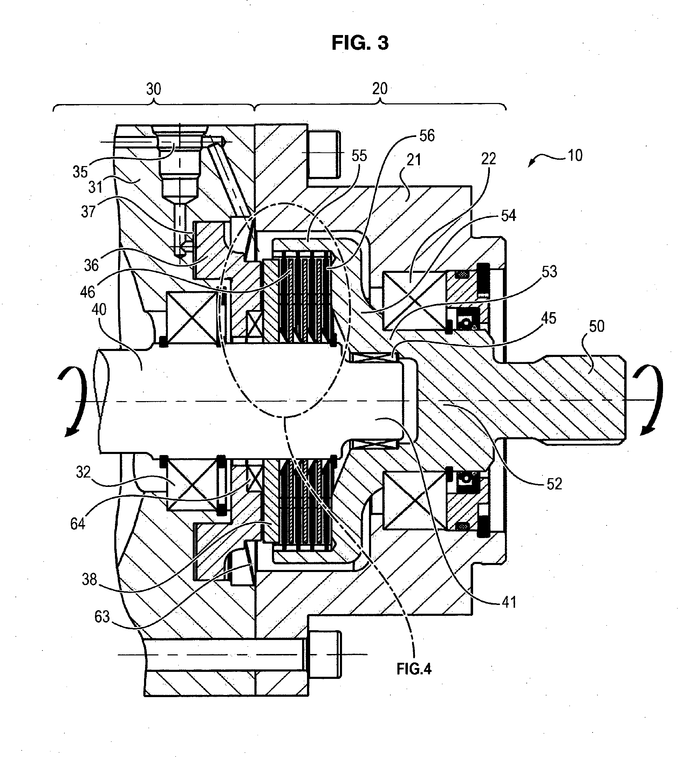

Les figures 2 et 3 illustrent respectivement une vue globale et une vue détaillée d'un appareil hydraulique selon un aspect de l'invention.

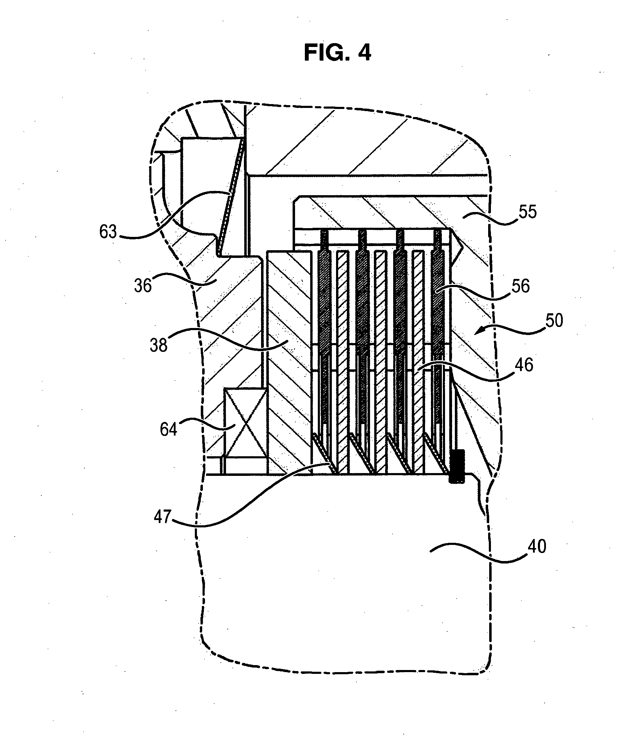

La figure 4 est une vue détaillée d'une partie spécifique de la figure 3, qui est indiquée sur la figure 3 par une zone encerclée.

Les figures 2 et 3 représentent un appareil hydraulique 10 comprenant
- une machine hydraulique 30, qui est typiquement une pompe ou un moteur hydraulique, entraînant un arbre machine 40, et
- un embrayage 20, comprenant un arbre d'embrayage 50 et adapté pour mettre en prise l'arbre machine 40 avec l'arbre d'embrayage 50.
Une extrémité proximale 41 et une extrémité distale 42 de l'arbre machine 40, et une extrémité proximale 51 et une extrémité distale 52 de l'arbre d'embrayage 50 sont définies.

L'arbre d'embrayage 50 peut être soit un arbre d'entrée si la machine hydraulique est une pompe, soit un arbre de sortie si la machine hydraulique 30 est un moteur.

L'appareil 10 tel qu'illustré comprend un carter constitué de parties assemblées, c'est-à-dire
- un carter de machine 31,
- un carter d'embrayage 21,
ces parties étant typiquement boulonnées ensemble de façon à former un carter hermétique pour l'appareil 10.

La machine hydraulique 30 peut être de divers types, tels que
- une machine hydraulique à pistons radiaux, par exemple avec une came interne ou avec une came externe ;
- une machine hydraulique à pistons axiaux avec un axe courbé ou avec une plaque oscillante fournissant un déplacement variable.

Un exemple spécifique d'une telle machine hydraulique à pistons axiaux et un déplacement variable qui peut être utilisée dans le présent appareil 10 est la machine hydraulique qui est disponible sous la référence « P90 » chez Poclain Hydraulics associée à un embrayage tel que ceux qui sont vendus sous la référence « série 600 » par la société Logan.
De façon plus générale, la machine hydraulique 30 peut être une pompe avec des pistons axiaux et des plaquettes de frein à disque, ayant un bloc-cylindres rotatif avec une plaque porte-soupape associée, et un déplacement variable à travers l'inclinaison d'une plaque de came.

L'arbre machine 40 est relié au carter de machine 31 via un premier palier de machine 32 et un second palier de machine qui n'est pas représenté sur les dessins, et l'arbre d'embrayage 50 est relié au carter d'embrayage 21 via un palier d'embrayage 22. L'arbre machine 40 et l'arbre d'embrayage 50 sont reliés par un palier d'arbre 45, qui est typiquement situé entre l'extrémité proximale 41 de l'arbre machine 40 et l'extrémité distale 52 de l'arbre d'embrayage 50.

L'arbre machine 40 est donc maintenu en position dans le carter de machine 31 par deux paliers qui assurent un positionnement adéquat. L'arbre d'embrayage 50 est ensuite associé à l'arbre machine 40 avec un certain degré de flexibilité puisque l'arbre d'embrayage 50 lui-même est relié au carter par un seul palier qui permet une adaptation du positionnement de l'arbre d'embrayage 50 par rapport à l'arbre machine 40, avec le palier d'arbre 45 assurant la liaison entre ladite machine et lesdits arbres d'embrayage 40 et 50. L'association de paliers assure donc l'alignement axial de l'arbre d'embrayage 50 et de l'arbre machine 40, sans nécessiter les contraintes de dimensionnement extrêmement précises d'un appareil tel que l'appareil divulgué sur la figure 1 et présenté précédemment où chaque arbre est relié à un carter par deux paires de paliers, et chaque arbre n'a ainsi aucun degré de mobilité lors de l'association de l'arbre d'embrayage 50 à l'arbre machine 40.

L'extrémité distale 52 de l'arbre d'embrayage 50 est de façon avantageuse en forme de cloche, avec un diamètre qui augmente en direction de l'extrémité distale libre de l'arbre d'embrayage 50, définissant ainsi un espace interne à ladite extrémité distale où l'extrémité proximale 41 de l'arbre machine 40 est ajustée.
Dans le mode de réalisation illustré, l'arbre d'embrayage 50 comporte un corps principal cylindrique, duquel s'étendent deux portions en forme d'anneaux concentriques 53 et 55, reliées par un épaulement effilé 54.
Ces deux portions en forme d'anneaux 53 et 55 et l'épaulement effilé 54 définissent ledit espace interne, avec un diamètre qui augmente de la première portion en forme d'anneau 53 vers la seconde portion en forme d'anneau 55.
Ainsi, dans le mode de réalisation illustré, l'espace interne défini par l'extrémité distale en forme de cloche 52 de l'arbre d'embrayage 50 peut être divisé en trois portions :
- une portion proximale, qui est à peu près cylindrique, et a un premier diamètre d1,
- une portion distale, qui est également à peu près cylindrique, et a un second diamètre interne, d2, avec d2 > d1 ; et
- une portion intermédiaire, qui est à peu près conique et est disposée entre ladite portion proximale et ladite portion distale, avec un diamètre qui augmente de d1 à d2.

La géométrie spécifique de l'arbre d'embrayage 50 fournit de la place pour loger l'extrémité proximale 41 de l'arbre machine 40 à l'intérieur dudit espace interne, et plus précisément pour insérer le palier d'arbre 45 dans ladite portion proximale de l'espace interne, autour de l'extrémité proximale 41 de l'arbre machine 40.

L'arbre machine et la portion distale de l'extrémité distale en forme de cloche 52 de l'arbre d'embrayage 50 sont dotés de moyens de mise en prise, adaptés pour se mettre en prise de sorte que l'arbre d'embrayage 50 et l'arbre machine 40 tournent à la même vitesse.
Dans le mode de réalisation illustré, les moyens de mise en prise sont des disques d'embrayage 46 et 56, qui sont respectivement reliés à l'arbre machine 40 et à l'arbre d'embrayage 50. Plus précisément, les disques d'embrayage 46 et 56 sont situés à l'intérieur de l'espace interne défini par l'extrémité distale en forme de cloche 52 de l'arbre d'embrayage 50, les disques d'embrayage 56 de l'arbre d'embrayage 50 étant reliés à la surface interne de la portion distale de l'extrémité distale en forme de cloche 52 de l'arbre d'embrayage 50. Lesdits disques d'embrayage 46 et 56 sont couplés à des ressorts d'embrayage 47, qui les maintiendront séparés par défaut.

Un port d'admission 35 est créé dans le carter de machine 31 afin de permettre le raccordement à une source de pression, qui est adaptée pour augmenter la pression dans une chambre 37 d'un piston d'embrayage 36 afin de faire effectuer une translation audit piston d'embrayage 36 le long de l'axe de l'arbre machine 40, qui exerce une pression sur unerondelle 38 qui agira elle-même sur les disques d'embrayage 46 et 56 afin de les mettre en contact, et mettant ainsi en prise l'arbre machine 40 avec l'arbre d'embrayage 50.
Dans le mode de réalisation illustré, ladite chambre 37 du piston d'embrayage 36 est maintenue par défaut dans une position éloignée de la rondelle 38 et ainsi éloignée des disques d'embrayage 46 et 56 à travers un ressort de piston 63, qui dans le présent mode de réalisation repose sur le carter d'embrayage 21 afin d'exercer une pression sur le piston d'embrayage 36. Ledit piston d'embrayage 36 est centré par sa chambre 37 dans le carter 31 et exerce une pression sur l'anneau 38 via un palier axial 64. L'anneau 38 coulisse sur l'arbre 40 le long de cannelures axiales. L'anneau 38 n'est pas mécaniquement boulonné au piston d'embrayage 36, mais seulement poussé par le palier axial 64.
Ainsi, lorsqu'aucune pression n'est appliquée via le port d'admission 35, le piston d'embrayage 36 ne compresse pas la rondelle 38 de sorte que les disques d'embrayage 46 et 56 sont séparés par des ressorts d'embrayage 47, et l'arbre machine 40 n'est donc pas couplé à l'arbre d'embrayage 50.

Le port d'admission 35 est par exemple alimenté par une circuiterie hydraulique ou pneumatique, un accumulateur, ou par un multiplicateur ou compresseur de pression air-huile interne ou externe.
L'utilisation d'un accumulateur fournit des moyens permettant d'obtenir d'une pression appropriée pour mettre en prise les disques 46 et 56 au démarrage de l'appareil. L'embrayage peut également être activé mécaniquement, par exemple en utilisant des moyens d'activation mécanique pour piloter le déplacement du piston d'embrayage 36.
La figure 3 montre que le piston d'embrayage 36 est situé à la jonction entre le carter d'embrayage 21 et le carter de machine 31, sa chambre qui est alimentée par le port d'admission 35 est située à l'intérieur du carter de machine 31 alors qu'il exerce une pression sur la rondelle 38 qui est située à l'intérieur du carter d'embrayage 21.
Dans le mode de réalisation illustré, le piston d'embrayage 36 est en forme de cloche, et englobe partiellement le palier de machine 32, la chambre dudit piston d'embrayage 36 étant décalée de façon radiale autour de l'arbre machine 40 relativement au palier de machine 32.
Le piston d'embrayage 36 est donc intégré dans le logement de pompe, et partiellement autour du palier de machine 32 de l'arbre machine 40.

La machine hydraulique 30 est typiquement associée à une pompe de gavage 60, par exemple une pompe à rotor communément connue représentée sur la figure 2, qui est utilisée par exemple pour fournir une pression d'évacuation à la pompe. Cette pompe à rotor peut comprendre une fonction de by-pass grâce à une soupape de décharge de pression, comme il est communément connu dans les circuits d'évacuation de pompe.

L'invention fournit donc une machine hydraulique avec un embrayage intégré, dont la longueur est considérablement diminuée relativement à un ensemble de machine hydraulique et d'embrayage conventionnel. L'invention revendiquée fournit également un guidage suffisant et fiable de l'arbre d'embrayage, et assure un transfert de couple sans risque entre l'arbre d'embrayage et l'arbre machine, et un débrayage sans risque.
Un tel appareil peut par exemple être utilisé dans un véhicule permettant d'entraîner ou d'assister l'entraînement des roues ou de tout autre dispositif du véhicule.

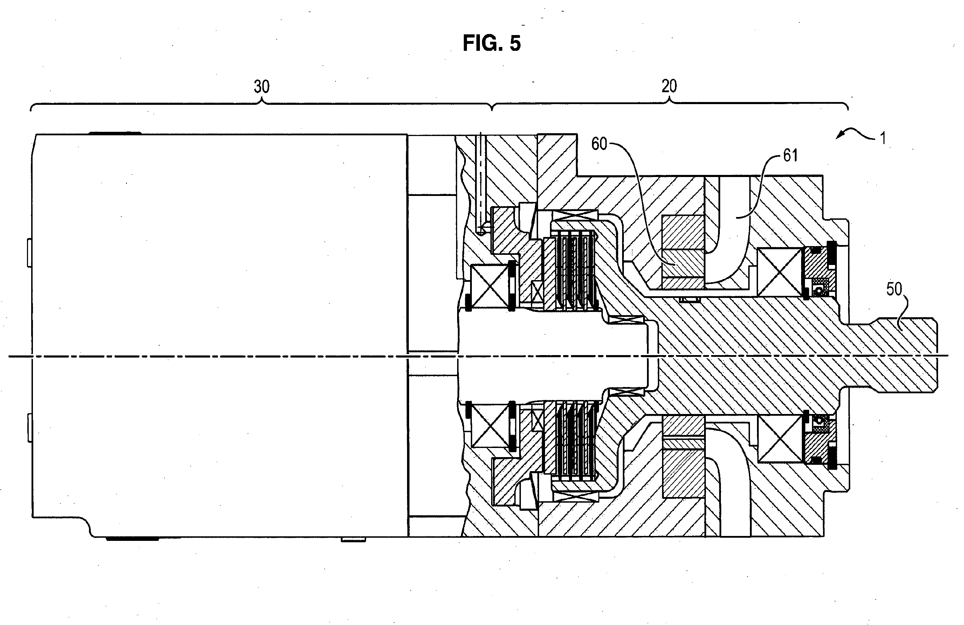

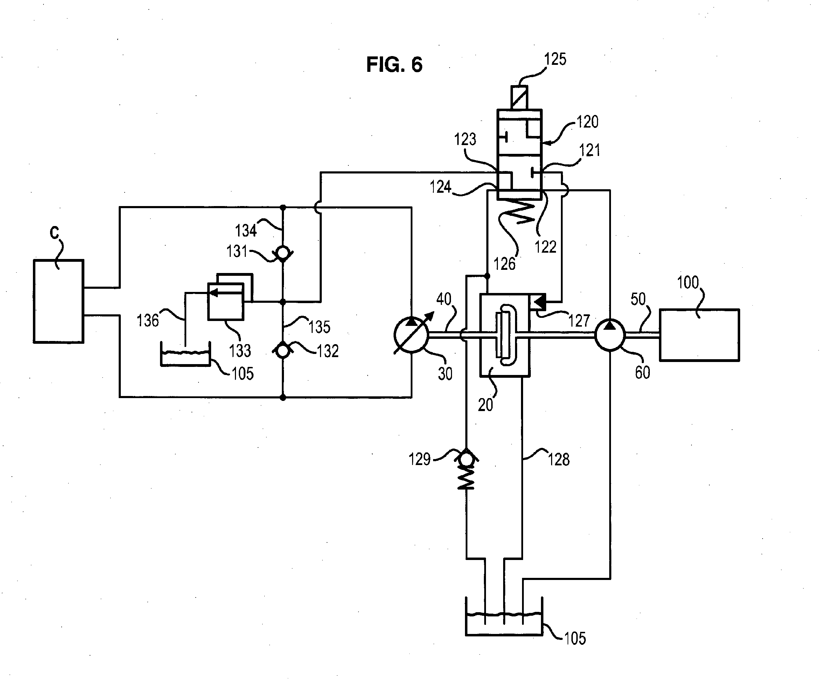

La figure 5 illustre un autre mode de réalisation de l'ensemble de la figure 2, qui décrit les canaux d'alimentation de la pompe de gavage 60 utilisés pour délivrer une pression d'évacuation ou un flux de rinçage à l'ensemble.
Un tel mode de réalisation permet au système d'avoir un flux de rinçage ou une pression d'évacuation et de pilotage dès que le moteur principal est allumé, de façon compacte. Cela permet d'éviter une chauffe excessive de l'embrayage en position ouverte lorsque l'arbre d'embrayage est allumé.
Comme illustré sur la figure 6, la pompe de gavage est alimentée en pression hydraulique par des canaux hydrauliques en amont de l'embrayage relativement à la machine hydraulique 30.
La figure 6 représente l'embrayage 20, qui est relié d'un côté au moteur principal 100 d'un véhicule, par exemple un moteur thermique, via l'arbre d'embrayage 50, et d'un autre côté à la machine hydraulique 30 via l'arbre machine 40 ; par exemple un moteur ou une pompe hydraulique.
L'embrayage 20 est également relié à un réservoir de pression atmosphérique 105 via une ligne de récupération des fluides 128 afin de permettre le rinçage de son huile.

La machine hydraulique est reliée à un circuit hydraulique C. Ce circuit hydraulique C peut comprendre par exemple une machine hydraulique telle qu'un moteur ou une pompe, ou un circuit de détection de charge.
Ce circuit hydraulique comprend un circuit de charge relié à l'admission et au refoulement de la machine hydraulique 30. Ce circuit de charge est fabriqué selon une configuration bien connue de l'homme du métier afin de réguler la pression dans ledit circuit hydraulique C, et comprend deux canaux de charge 134 et 135, comprenant des soupapes de non-retour 131 et 132, reliés audit circuit hydraulique C par des soupapes de non-retour 131 et 132, et un canal d'évacuation 136 relié au réservoir de pression atmosphérique 105 par un limiteur de pression 133.

Une pompe de gavage 60 est couplée au moteur principal 100, et reliée à un distributeur 120 qui agit comme moyens de pilotage de ladite pompe de gavage 60. Le distributeur-120 comprend 4 orifices :
- un premier orifice 121 qui est relié à une commande 127 de l'embrayage 20,
- un deuxième orifice 122 relié à la pompe de gavage 60,
- un troisième orifice 123 relié à un circuit de charge du circuit hydraulique C de la machine hydraulique 30,
   - un quatrième orifice 124 relié à un canal de rinçage de l'embrayage 20.
Le distributeur 120 peut alterner entre deux configurations :
- une première configuration où le premier orifice 121 est fermé, et les deuxième 122, troisième 123 et quatrième 124 orifices sont raccordés ensemble,
- une seconde configuration où les premier 121, deuxième 122 et troisième 123 orifices sont raccordés ensemble, et le quatrième orifice 124 est fermé.
Le distributeur 120 est piloté par des moyens d'actionnement 125 qui peuvent le faire passer de sa première configuration à sa seconde configuration, et est maintenu par défaut dans sa première configuration par des moyens élastiques 126 tels qu'un ressort.

Dans sa première configuration, le distributeur 120 permet à la pompe de gavage 60 de rincer l'embrayage 20. Le fluide passe à travers le boîtier d'embrayage, et retourne vers le réservoir d'huile 105 par une ligne de récupération des fluides 128.
La pression de rinçage est toujours plus basse que la pression d'ouverture de l'embrayage, et que la pression d'évacuation définie par le limiteur de pression 133. Dans sa seconde configuration, le distributeur 120 permet à la pompe de gavage 60 d'activer l'embrayage 20 via la commande 127 et de charger le circuit hydraulique C de la machine hydraulique 30.

Dans le présent mode de réalisation, le canal de rinçage de l'embrayage 20 est également raccordé au réservoir de pression atmosphérique 105 via une soupape de décharge 129, qui est typiquement calibrée pour s'ouvrir à une pression de 1 ou 1,5 bar, afin d'éviter une mise en prise accidentelle de l'embrayage 20 si la ligne de récupération des fluides 128 de l'embrayage 20 devait être obstruée.
Cette caractéristique optionnelle fournit donc une mesure de sécurité supplémentaire à l'ensemble.

Cette structure où la pompe de gavage 60 est située en amont de l'embrayage 20 relativement au moteur principal 100 fournit un chargement continu lorsque le moteur principal est allumé, que l'embrayage soit mis en prise ou désolidarisé.
De plus, en couplant l'embrayage à une telle pompe de gavage 60, cette structure fournit une lubrification et un lavage de l'embrayage afin d'éviter la surchauffe.

D'autres modes de réalisation de cette structure peuvent être pris en considération, par exemple en utilisant deux pompes de charge distinctes : une pompe de chargé dédiée au chargement et au pilotage de l'embrayage 20 qui est située en amont de l'embrayage, et une seconde pompe de gavage située en aval de l'embrayage, qui sera dédiée au chargement du circuit hydraulique C.

La pompe de gavage 60, telle que présentée sur la figure 6, peut aussi être directement reliée au circuit de charge du circuit hydraulique C, étant donné que le distributeur 120 raccorde cette pompe de gavage 60 au circuit de charge du circuit hydraulique C dans ses deux configurations.
Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

1. Appareil hydraulique (10) comprenant
- une machine hydraulique (30) comprenant un arbre machine (40) adapté pour entraîner un bloc-cylindres, ledit arbre machine (40) ayant une extrémité proximale (41) et une extrémité distale (42),
- un embrayage (20) comprenant un arbre d'embrayage (50) ayant une extrémité proximale (51) et une extrémité distale (52), et des moyens de mise en prise pour mettre en prise sélectivement ledit arbre d'embrayage avec ledit arbre machine,
lesdits moyens de mise en prise comprenant une pluralité de disques de friction (56) reliés à l'extrémité distale (52) de l'arbre d'embrayage (50) et une pluralité de disques de friction (46) reliés à l'extrémité proximale (41) de l'arbre machine (40), lesdits disques (46, 56) étant disposés radialement autour dudit arbre machine (40),
ledit appareil (10) comprenant en outre des moyens de pilotage (35), un piston d'embrayage (36) et une rondelle (38) entourant ledit arbre machine, lesdits moyens de pilotage (35) étant adaptés pour appliquer une pression de pilotage sur ledit piston d'embrayage (36) qui transmet cette pression de pilotage à ladite rondelle (38), qui à son tour transmet cette pression de pilotage auxdits moyens de mise en prise (46, 56),
lesdits arbre machine (40) et arbre d'embrayage (50) sont situés à l'intérieur d'un carter définissant un espace interne commun qui maintient les deux arbres (40, 50), ledit arbre machine (40) étant raccordé audit carter par deux paliers de machine (32), ledit arbre d'embrayage (50) étant raccordé au carter par un seul palier d'embrayage (22), et lesdits arbre machine (40) et arbre d'embrayage (50) sont centrés par un palier de centrage (45) adapté pour fournir un centrage desdits arbres (40, 50) relativement l'un à l'autre
**caractérisé en ce que** l'extrémité distale (52) dudit arbre d'embrayage (50) est en forme de cloche de façon à entourer l'extrémité proximale (41) dudit arbre machine (40), ladite forme de cloche définissant un espace interne où l'extrémité proximale (41) de l'arbre machine (40) et les disques de friction (56) reliés à l'arbre d'embrayage (50) sont situés, et **en ce que** ledit piston d'embrayage (36) est en forme de cloche et entoure au moins partiellement ledit palier de machine (32).

2. Appareil (10) selon la revendication 1, dans lequel ledit carter comprend un carter de machine (31) dans lequel la machine hydraulique (30) est située, et un carter d'embrayage (21) dans lequel l'embrayage (20) est situé, lesdits carters (21, 31) définissant un espace interne commun, le piston d'embrayage (36) étant situé à l'intérieur du carter de machine (31) de sorte que son déplacement l'amène en contact avec la rondelle (38) situé à l'intérieur du carter d'embrayage (21).

3. Appareil (10) selon la revendication 2, dans lequel le piston d'embrayage (36) est associé à un ressort de piston (63) reposant sur le carter d'embrayage (21) et s'opposant au déplacement du piston d'embrayage (36) résultant d'une augmentation de la pression à l'intérieur de la chambre du piston d'embrayage (36).

4. Appareil (10) selon l'une quelconque des revendications 1 à 3, dans lequel lesdits moyens de pilotage (35) comprennent un accumulateur ou un compresseur adapté pour alimenter lesdits moyens de pilotage.

5. Véhicule comprenant un appareil hydraulique (10) selon l'une quelconque des revendications 1 à 4.

6. Véhicule selon la revendication 5, dans lequel l'arbre d'embrayage (50) est relié à un moteur principal dudit véhicule, et qui comprend une pompe de gavage couplée à l'arbre de moteur, en amont de l'arbre (20) relativement au moteur principal, ladite pompe de gavage étant reliée à des moyens de pilotage de sorte qu'elle rince sélectivement l'embrayage, charge la machine hydraulique et active l'embrayage.

## Patentansprüche

1. Hydraulische Einrichtung (10) mit:
- einer hydraulischen Maschine (30) mit einer Maschinenwelle (40), die einen Zylinderblock anzutreiben vermag, wobei die Maschinenwelle (40) ein proximales Ende (41) und ein distales Ende (42) aufweist,
- einer Kupplung (20) mit einer Kupplungswelle (50), die ein proximales Ende (51) und ein distales Ende (52) aufweist, und Eingriffsmitteln, um die Kupplungswelle selektiv mit der Maschinenwelle in Eingriff zu bringen,
wobei die Eingriffsmittel eine Vielzahl von mit dem distalen Ende (52) der Kupplungswelle (50) verbundenen Reibscheiben (56) und eine Vielzahl von mit dem proximalen Ende (41) der Maschinenwelle (40) verbundenen Reibscheiben (46) umfasst, wobei die Scheiben (46, 56) radial um die Maschinenwelle (40) angeordnet sind, wobei die Einrichtung (10) ferner Steuermittel (35), einen Kupplungskolben (36) und eine die Maschinenwelle umgebende Scheibe (38) umfasst, wobei die Steuermittel (35) einen Steuerdruck an den Kupplungskolben (36) anzulegen vermögen, der diesen Steuerdruck auf die Scheibe (38) überträgt, die ihrerseits diesen Steuerdruck auf die Eingriffsmittel (46, 56) überträgt,
wobei die Maschinenwelle (40) und die Kupplungswelle (50) innen in einem Gehäuse angeordnet sind, das einen gemeinsamen Innenraum bildet, der die beiden Wellen (40, 50) hält, wobei die Maschinenwelle (40) mit dem Gehäuse durch zwei Maschinenlager (32) verbunden ist, wobei die Kupplungswelle (50) mit dem Gehäuse durch ein einziges Kupplungslager (22) verbunden ist, und die Maschinenwelle (40) und die Kupplungswelle (50) durch ein Zentrierlager (45) zentriert sind, das eine Zentrierung der Wellen (40, 50) bezüglich einander vorzunehmen vermag,
**dadurch gekennzeichnet, dass** das distale Ende (52) der Kupplungswelle (50) die Form einer Glocke hat, so dass es das proximale Ende (41) der Maschinenwelle (40) umgibt, wobei die Glockenform einen Innenraum bildet, in dem das proximale Ende (41) der Maschinenwelle (40) und die mit der Kupplungswelle (50) verbundenen Reibscheiben (56) angeordnet sind, und dass der Kupplungskolben (36) die Form einer Glocke hat und das Maschinenlager (32) wenigstens teilweise umgibt.

2. Einrichtung (10) nach Anspruch 1,
bei der das Gehäuse ein Maschinengehäuse (31), in dem die hydraulische Maschine (30) angeordnet ist, und ein Kupplungsgehäuse (21) umfasst, in dem die Kupplung (20) angeordnet ist, wobei die Gehäuse (21, 31) einen gemeinsamen Innenraum bilden, wobei der Kupplungskolben (36) innen im Maschinengehäuse (31) solchermaßen angeordnet ist, dass er durch seine Bewegung mit der innen im Kupplungsgehäuse (21) angeordneten Scheibe (38) in Kontakt gelangt.

3. Einrichtung (10) nach Anspruch 2,
bei der der Kupplungskolben (36) einer Kolbenfeder (63) zugeordnet ist, die auf dem Kupplungsgehäuse (21) ruht und sich der Bewegung des Kupplungskolbens (36) widersetzt, die aus einer Erhöhung des Drucks innen in der Kammer des Kupplungskolbens (36) resultiert.

4. Einrichtung (10) nach einem der Ansprüche 1 bis 3,
bei der die Steuermittel (35) einen Druckspeicher oder einen Verdichter umfassen, der jeweils die Steuermittel zu speisen vermag.

5. Fahrzeug mit einer hydraulischen Einrichtung (10) nach einem der Ansprüche 1 bis 4.

6. Fahrzeug nach Anspruch 5,
bei dem die Kupplungswelle (50) mit einem Hauptmotor des Fahrzeugs verbunden ist, und bezüglich des Hauptmotors stromaufwärts der Welle (20) eine mit der Motorwelle verbundene Boosterpumpe aufweist, wobei die Boosterpumpe mit Steuermitteln solchermaßen verbunden ist, dass sie die Kupplung selektiv spült, die hydraulische Maschine beaufschlagt und die Kupplung aktiviert.

## Claims

1. Hydraulic apparatus (10) comprising
- a hydraulic machine (30) comprising a machine shaft (40) adapted to drive a cylinder block, said machine shaft (40) having a proximal end (41) and a distal end (42),
- a clutch (20) comprising a clutch shaft (50) having a proximal end (51) and a distal end (52), and engaging means for selectively engaging said clutch shaft with said machine shaft,
said engaging means comprising a plurality of friction discs (56) linked to the distal end (52) of the clutch shaft (50) and a plurality of friction discs (46) linked to the proximal end (41) of the machine shaft (40), said discs (46, 56) being disposed radially around said machine shaft (40),
said apparatus (10) further comprising piloting means (35), a clutch piston (36) and a thrust washer (38) surrounding said machine shaft, said piloting means (35) being adapted to apply a piloting pressure on said clutch piston (36) which transmits this piloting pressure to said thrust washer (38), which itself transmits this piloting pressure to said engaging means (46, 56),
said machine shaft (40) and clutch shaft (50) are located within a casing defining a common inner space which holds both shafts (40, 50), said machine shaft (40) being connected to said casing by two machine bearings (32), said clutch shaft (50) being connected to the casing by a single clutch bearing (22), and said machine shaft (40) and clutch shaft (50) are centred by a centring bearing (45) adapted to provide a centring of said shafts (40, 50) relative to each other **characterized in that** the distal end (52) of said clutch shaft (50) is bell-shaped so as to surround the proximal end (41) of said machine shaft (40), said bell shape defining an inner space where the proximal end (41) of the machine shaft (40) and the friction discs (56) linked to the clutch shaft (50) are located, wherein said clutch piston (36) is bell-shaped and at least partially surrounds said machine bearing (32).

2. Apparatus (10) according to claim 1, wherein said casing comprises a machine casing (31) within which is located the hydraulic machine (30), and a clutch casing (21) within which is located the clutch (20), said casings (21, 31) defining a common internal space, the clutch piston (36) being located within the machine casing (31) so that its displacement brings it into contact with the thrust washer (38) located within the clutch casing (21).

3. Apparatus (10) according to claim 2, wherein the clutch piston (36) is associated with a piston spring (63) resting on the clutch casing (21), and opposing the displacement of the clutch piston (36) resulting from an increase in pressure within the chamber of the clutch piston (36).

4. Apparatus (10) according to any of claims 1 to 3, wherein said piloting means (35) comprise an accumulator or a compressor adapted to feed said piloting means.

5. Vehicle comprising a hydraulic apparatus (10) according to any of claims 1 to 4.

6. Vehicle according to claim 5, wherein the clutch shaft (50) is linked to a main engine of said vehicle, and which comprises a charge pump coupled to the engine shaft, upstream of the shaft (20) relatively to the main engine, said charge pump being linked to piloting means so that it selectively flushes the clutch, charges the hydraulic machine and activates the clutch.
